## Europäisches Patentamt
## European Patent Office
## Office européen des brevets

(11) Veröffentlichungsnummer: **0 009 799**
**B1**

(12) **EUROPÄISCHE PATENTSCHRIFT**

(45) Veröffentlichungstag der Patentschrift:
25.05.83

(21) Anmeldenummer: 79103735.1

(22) Anmeldetag: 01.10.79

(51) Int. Cl.³: **G 06 K 5/00**, G 06 M 3/12,
G 06 C 11/00 // G06F11/10

(54) Vorrichtung zur Darstellung und/oder Erzeugung eines modulo-n-Prüfzeichens neben einer mehrstelligen Folge von Zeichen.

(30) Priorität: 02.10.78 DE 2842905

(43) Veröffentlichungstag der Anmeldung:
16.04.80 Patentblatt 80/8

(45) Bekanntmachung des Hinweises auf die Patenterteilung:
25.05.83 Patentblatt 83/21

(84) Benannte Vertragsstaaten:
FR GB IT

(56) Entgegenhaltungen:
DE-C-908 423
US-A-1 8ïJ 329
IBM TECHNICAL DISCLOSURE BULLETIN, Vol. 10, Nr. 12, Mai 1968, Armonk, New York, USA, W. J. LAVIN: »Printing numbering head for self-checking. Number Modulus-11«, Seiten 1872—1873.

(73) Patentinhaber: **Nixdorf Computer Aktiengesellschaft, Fürstenallee 7, D-4790 Paderborn (DE)**

(72) Erfinder: **Unglaube, Uwe, 5, Staudenweg, D-1000 Berlin 22 (DE)**
Erfinder: **Miehe, Friedrich Viktor, 43, Bertramstrasse, D-1000 Berlin 28 (DE)**

(74) Vertreter: **Schaumburg, Karl-Heinz et al, Patentanwälte Schaumburg, Schulz-Dörlam & Thoenes Mauerkircherstrasse 31, D-8000 München 80 (DE)**

**0 009 799**

## Vorrichtung zur Darstellung und/oder Erzeugung eines modulo-n-Prüfzeichens neben einer mehrstelligen Folge von Zeichen

Die Erfindung betrifft eine Vorrichtung zur Darstellung und/oder Erzeugung eines Prüfzeichens neben einer mehrstelligen Folge von Zeichen, von denen jeweils eines einem n mögliche Zeichen darstellenden und/oder erzeugenden, in n mögliche Positionen einstellbaren Zeichenträger zugeordnet sind, mittels eines Prüfzeichenträgers, der mit einer Einstellvorrichtung über ein Einstellelement koppelbar und bei Betätigung der Einstellvorrichtung um einen vorbestimmten Betrag verstellbar ist.

In der Datenverarbeitungstechnik müssen Daten vor ihrer Verarbeitung in einer Datenverarbeitungsanlage auf Datenträgern in geeigneter Darstellungsform erfaßt werden, damit sie im Rahmen einer Datenübertragung an die Datenverarbeitungsanlage übertragen und in sie eingegeben werden können. Es ist möglich, die Daten maschinell oder auch manuell zu erfassen. Hierbei können durch verschiedene Ursachen Fehler auftreten. Solche Ursachen sind beispielsweise gestörte Datenträger oder Datenzeichen, Funktions- oder Konstruktionsfehler der zur Datenerfassung verwendeten Geräte, Bedienungsfehler oder auch äußere Störeinflüsse wie z. B. elektromagnetische oder optische Störungen.

Besonders bei der manuellen Datenerfassung und Datenübertragung können bei längeren Zeichenfolgen Fehler durch Zeichenvertauschung, Zeichenauslassung oder Mehrfacheingabe ein und desselben Zeichens verursacht werden. Ferner sind Störungen durch schlechte Lesbarkeit von Zeichen möglich. Solche Fälle treten oft auch dann auf, wenn an sich für eine maschinelle Datenerfassung vorgesehene Zeichenfolgen in ihrer Lesbarkeit beeinträchtigt sind, so daß sie manuell, d. h. visuell, erfaßt werden müssen.

Um Fehler der vorstehend beschriebenen Art im Bereich der Datenerfassung und der Datenübertragung zur Datenverarbeitungsanlage zu vermeiden, werden Prüfzeichen verwendet, die gleichzeitig mit einer Zeichenfolge erfaßt bzw. übertragen werden und eine Prüfung der Zeichenfolge auf ihre Richtigkeit ermöglichen. Häufig werden modulo-n-Prüfzeichen verwendet, die im einfachsten Falle beispielsweise bei der Übertragung von Ziffernfolgen die Quersumme oder das Komplement zur Quersumme der jeweiligen Ziffernfolge dadurch kennzeichnen, daß sie jeweils den Unterschied der Quersumme zum nächstniedrigeren bzw. nächsthöheren ganzzahligen Vielfachen der Zahl n angeben, die der Zahl möglicher Ziffern pro Ziffernstelle entspricht. Im Falle der Erfassung und Übertragung nicht von Ziffern, sondern anderer Zeichendarstellungen handelt es sich um gleichartig erzeugte Prüfzeichen, denen jeweils ein Zahlenwert zugeordnet sein kann.

Prüfzeichen können natürlich innerhalb einer Datenverarbeitungsanlage oder auch mit elektronischen Codiereinrichtungen verhältnismäßig leicht erzeugt werden. In vielen Fällen ist insbesondere bei der Datenerfassung jedoch der direkte Zugriff zu derartigen Einrichtungen nicht möglich. Solche Fälle sind beispielsweise bei einfachen Vorrichtungen zur Auszeichnung von Waren mit Preisen und/oder Artikelnummern, bei stationären Druckmaschinen zur Erzeugung von Datenträgern, deren Zeichen maschinell lesbar sein sollen, bei auf eine bestimmte Ziffernfolge einstellbaren Dekadenschaltern oder auch bei Zählwerken für Strom-, Gas- oder Wasserverbrauch gegeben. Besonders bei Druckmaschinen, in denen Typenräder maschinell auf eine jeweils gewünschte Zeichenfolge eingestellt werden, kann die Funktionssicherheit durch ein Prüfzeichen erhöht werden, das gleichzeitig mit der jeweiligen Zeichenfolge erzeugt und zusammen mit ihr abgedruckt wird.

Wenn in diesen und ähnlichen Fällen gleichzeitig mit der Datenerfassung ein Prüfzeichen selbsttätig erzeugt wird, so kann die Datensicherheit erhöht und damit die Möglichkeit von Fehlern auch bei der anschließenden Datenübertragung wesentlich verringert, wenn nicht ausgeschaltet werden.

Aus DE-C-908 423 ist eine Vorrichtung eingangs genannter Art bekannt, die als Zählwerk arbeitet. Dieses umfaßt mehrere Zählräder, wovon eines durch elektrische oder mechanische Antriebsmittel angetrieben wird. Die übrigen Zählräder werden immer nach einer vollen Umdrehung eines vorhergehenden Zählrades um einen bestimmten Betrag verstellt. Das Prüfrad ist mit dem erstgenannten angetriebenen Zählrad derart gekoppelt, daß es immer um einen vorgegebenen Betrag verstellt wird, wenn das angetriebene Zählrad verstellt wird. Das Prüfzeichen wird als Rest bei einer Division der eingestellten Zahl durch N berechnet und ist kein modulo-n-Zeichen bezüglich einer Quersumme.

Aus IBM Technical Disclosure Bulletin, Vol. 10, Nr. 12, Mai 1968, Seiten 1872 bis 1873 ist ein Druckkopf mit mehreren Druckrädern bekannt, bei dem ein Prüfzeichen durch eine modulo-11-Berechnung gewonnen wird. Dabei wird jedes Druckrad individuell verstellt und ein Kontrollzeichen, das von der Verstellung aller Druckräder abhängig ist, in einem logischen Schaltkreis erzeugt.

Es ist Aufgabe der Erfindung, eine Vorrichtung zur Darstellung und/oder Erzeugung eines Prüfzeichens anzugeben, die bei der Erfassung einer Zeichenfolge selbsttätig ein modulo-n-Prüfzeichen nach einem möglichst einfachen mechanischen Prinzip erzeugt, so daß umfangreiche elektronische Hilfsmittel oder der Zugriff zu einer Datenverarbeitungseinrichtung nicht erforderlich sind.

Eine Vorrichtung eingangs genannter Art ist zur Lösung dieser Aufgabe erfindungsgemäß derart

2

ausgebildet, daß zur Darstellung und/oder Erzeugung eines modulo-n-Prüfzeichens mindestens ein weiteres Einstellelement vorgesehen ist, daß die Einstellelemente über die Einstellvorrichtung miteinander gekoppelt sind, und daß während der Kopplung eines Einstellelements mit dem Prüfzeichenträger die Zeichenträger mit einem weiteren Einstellelement individuell koppelbar sind.

Durch die Erfindung wird erreicht, daß bei der Verstellung jeder beliebigen Stelle der einstellbaren Zeichenträger, die z. B. durch eine Drehbewegung erfolgt, immer der Prüfzeichenträger um den jeweils vorgegebenen Betrag mitverstellt wird. Dadurch ergibt sich für jeden Einstellzustand der die Zeichen darstellenden und/oder erzeugenden Vorrichtung an dem Prüfzeichenträger die Möglichkeit, das modulo-n-Komplement oder die modulo-n-Quersumme der jeweiligen Zeichenfolge darzustellen bzw. zu erzeugen, wenn n die Zahl möglicher Einstellungen eines jeden einstellbaren Zeichenträgers ist. Im Falle eines Druckwerks mit beispielsweise 12 verschiedenen Zeichen pro Zeichenträger erfolgt dann eine modulo-12-Prüfzeichenrechnung, so daß die Richtigkeit der gedruckten Zeichenfolge bei einer späteren Weiterverarbeitung durch das gleichzeitig mitgedruckte Prüfzeichen überprüft werden kann. Besondere logische Schaltkreise sind nicht erforderlich.

Eine Erhöhung der Datensicherung ist möglich, wenn für die Verstellung verschiedener Zeichenträger unterschiedliche vorgegebene Beträge der Verstellung des Prüfzeichenträgers vorgesehen sind. Auf diese Weise kann eine Gewichtung der einzelnen Stellen der Zeichenfolge bei der Prüfzeichenerzeugung berücksichtigt werden. Wird im einfachsten Falle eine abwechselnde Gewichtung der einzelnen Zeichenstellen gemäß der Bewertungsfolge 1, 0, 1, 0 usw. vorgenommen, so bedeutet dies für die Prüfzeichenrechnung, daß die mit 1 gewichteten Zeichenstellen in die Rechnung einbezogen werden, während die mit 0 gewichteten Zeichenstellen unberücksichtigt bleiben. Dadurch kann beispielsweise eine Sicherung gegen Vertauschen benachbarter Zeichen ermöglicht werden. Andere Gewichtungen sind durch entsprechendes Wechseln des beschriebenen vorgegebenen Betrages möglich.

Im folgenden werden Ausführungsbeispiele der Erfindung für einfache Vorrichtungen zur Darstellung von Ziffernfolgen beschrieben.

Im einzelnen zeigt

Figur 1 eine schematische Darstellung eines einfachen mechanischen Ziffernwerks mit individuell einstellbaren Ziffernträgern und einem Prüfziffernträger in einem Seitenteilschnitt,

Figur 2 ein weiteres Ausführungsbeispiel der Erfindung bei einem von außen her einstellbaren Ziffernwerk,

Figur 3 einen schematischen Seitenteilschnitt eines weiteren Ziffernwerks, bei dem der Prüfziffernträger innerhalb der individuell einstellbaren Ziffernträger angeordnet ist,

Figur 4 den Schnitt 4-4 aus Fig. 3 und

Figur 5 eine Vorrichtung zur Darstellung und/oder Erzeugung einer Ziffernfolge mittels Dekadenschaltern mit zugeordneter, schematisch dargestellter Mechanik.

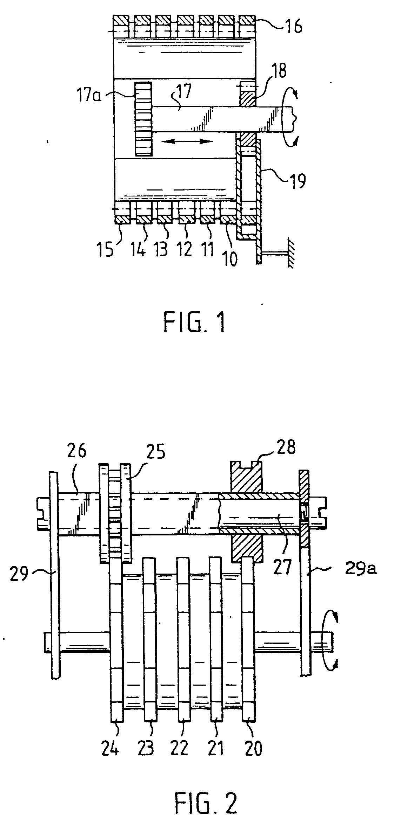

In Fig. 1 ist schematisch eine Anordnung von Typenrädern 10 bis 16 dargestellt, die beispielsweise mit zu druckenden Ziffern versehen sein können und deshalb im folgenden auch als Ziffernräder bezeichnet werden. Diese Ziffernräder gehören zu einem Druckwerk oder können auch innerhalb einer einfachen Ziffernanzeigeeinrichtung vorgesehen sein, die über eine Welle 17 eingestellt werden kann. Diese Welle 17 ist formschlüssig, jedoch in ihrer Längsrichtung verschiebbar in einem Antriebsrad 18 geführt, das seitlich unverschiebbar durch eine Arretierung 19 in seiner Lage gehalten wird, jedoch mit der Welle 17 gedreht werden kann. Die Welle 17 trägt ferner ein Einstellrad 17a, das mit der Welle 17 so verschoben werden kann, daß es mit einem der Ziffernräder 10 bis 15 in Eingriff kommt und dieses verstellt. Wird die Welle 17 gedreht, so dreht sich also das jeweils mit dem Einstellrad 17a in Eingriff befindliche Ziffernrad 10, 11, 12, 13, 14 oder 15 und gleichzeitig das Antriebsrad 18, welches mit dem Ziffernrad 16 gekoppelt ist. Dieses Ziffernrad 16 ist ein Prüfziffernrad, das zur Darstellung und/oder Erzeugung der jeweiligen Prüfziffer vorgesehen ist.

Da bei jeder Verstellung eines der Ziffernräder 10 bis 15 eine gleichartige Verstellung des Prüfziffernrades 16 erfolgt, ist es möglich, auf diesem Prüfziffernrad 16 jeweils eine Prüfziffer anzuzeigen, die der modulo-n-Quersumme oder dem Komplement zur modulo-n-Quersumme der mit den Ziffernrädern 10 bis 15 dargestellten Ziffern entspricht, wobei n die Zahl möglicher Stellungen dieser Ziffernräder 10 bis 15 ist.

Die folgende Tabelle zeigt Beispiele von Ziffernfolgen für n = 12 und sechs Ziffernräder sowie ein Prüfziffernrad.

| Prüfziffer entspricht Quersumme modulo-12 | | | | | | | Prüfziffer entspricht Komplement zur Quersumme modulo-12 | | | | | | |
|---|---|---|---|---|---|---|---|---|---|---|---|---|---|
| Ziffernfolge | | | | | | Prüfziffer | Ziffernfolge | | | | | | Prüfziffer |
| 7 | 2 | 5 | 1 | 4 | 8 | 3 | 7 | 2 | 5 | 1 | 4 | 8 | 9 |
| 8 | 3 | 6 | 2 | 5 | 9 | 4 | 8 | 3 | 6 | 2 | 5 | 9 | 8 |
| 9 | 4 | 7 | 3 | 6 | A | 5 | 9 | 4 | 7 | 3 | 6 | A | 7 |
| A | 5 | 8 | 4 | 7 | B | 6 | A | 5 | 8 | 4 | 7 | B | 6 |
| B | 6 | 9 | 5 | 8 | 0 | 7 | B | 6 | 9 | 5 | 8 | 0 | 5 |
| 0 | 7 | A | 6 | 9 | 1 | 8 | 0 | 7 | A | 6 | 9 | 1 | 4 |
| 1 | 8 | B | 7 | A | 2 | 9 | 1 | 8 | B | 7 | A | 2 | 3 |
| 2 | 9 | 0 | 8 | B | 3 | A | 2 | 9 | 0 | 8 | B | 3 | 2 |
| 3 | A | 1 | 9 | 0 | 4 | B | 3 | A | 1 | 9 | 0 | 4 | 1 |
| 4 | B | 2 | A | 1 | 5 | 0 | 4 | B | 2 | A | 1 | 5 | 0 |
| 5 | 0 | 3 | B | 2 | 6 | 1 | 5 | 0 | 3 | B | 2 | 6 | B |
| 6 | 1 | 4 | 0 | 3 | 7 | 2 | 6 | 1 | 4 | 0 | 3 | 7 | A |

$7+2+5+1+4+8 = 27$

$27 - 2 \cdot 12 = 3$ $\qquad\qquad\qquad 3 \cdot 12 - 27 = 9$

Vorstehend ist jeweils für das erste Beispiel der Tabelle die Berechnung der Prüfziffer aus der Quersumme der Ziffernfolge angegeben.

Für das vorstehend beschriebene Ausführungsbeispiel ist ein Übersetzungsverhältnis 1 : 1 der Drehbewegung der Ziffernräder 10 bis 15 und des Prüfziffernrades 16 vorausgesetzt. Es kann jedoch auch ein anderes Übersetzungsverhältnis sinnvoll sein oder das Übersetzungsverhältnis zwischen den einzelnen Ziffernrädern 10 bis 15 geändert werden, wenn eine andere Art der Prüfziffernrechnung durchgeführt werden soll. Wichtig für die Verwirklichung des Erfindungsgedankens ist es, daß das Prüfziffernrad 16 mit dem Verstellmechanismus für die Ziffernräder 10 bis 15 ständig so gekoppelt ist, daß es jede Drehbewegung eines der Ziffernräder 10 bis 15 mit vollzieht, wobei jedoch beispielsweise im Sinne einer Gewichtung vorstehend beschriebener Art unterschiedliche Übersetzungsverhältnisse vorgesehen sein können bzw. ggf. auch zur Gewichtung mit dem Wert Null keine Drehung des Prüfziffernrades 16 erfolgt.

Anstelle von Rädern als Zeichenträger können selbstverständlich auch Bänder oder Zeichenträger anderer Art vorgesehen sein.

Fig. 2 zeigt eine einfache Anordnung von Zeichenrädern 20 bis 24, die an ihrem Außenumfang verstellt werden können. Ein Antriebsrad 25 ist starr mit einer Hohlwelle 26 verbunden, die auf einer Achse 27 drehbar gelagert ist. Mit der Hohlwelle 26 ist ein Einstellrad 28 formschlüssig, jedoch seitlich auf ihr verschiebbar gekoppelt. Die Achse 27 ist in zwei Schwenkarmen 29 um 29a befestigt, die in nicht dargestellter Weise so geschwenkt werden können, daß das Antriebsrad 25 und das Einstellrad 28 außer Eingriff mit den Zeichenrädern 20 bis 24 gebracht werden können. In dieser Stellung kann dann das Einstellrad 28 auf der Welle 26 so verschoben werden, daß es beim Zurückschwenken der Schwenkarme 29 und 29a mit demjenigen der Zeichenräder 20 bis 23 in Eingriff kommt, dem es jeweils zugeordnet wurde. Im Gegensatz dazu bleibt das Antriebsrad 25 auf der Welle 26 so angeordnet, daß es in jeder Stellung des Einstellrades 28 stets mit dem Zeichenrad 24 in Eingriff steht. Wird nun mit dem Einstellrad 28 eines der Zeichenräder 20 bis 23 verstellt, so wird das Zeichenrad 24 gleichzeitig verstellt, so daß es in beschriebener Weise zur Darstellung bzw. Erzeugung eines Prüfzeichens benutzt werden kann.

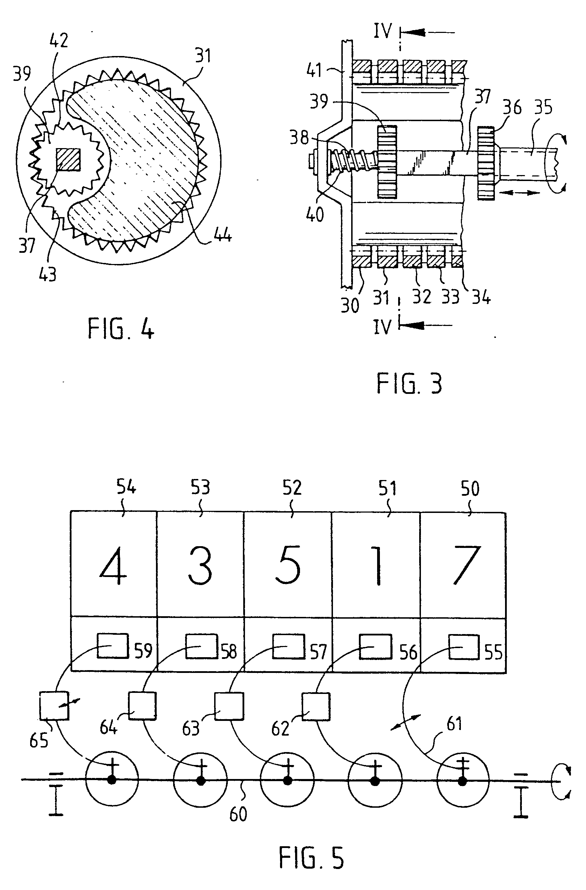

Fig. 3 zeigt eine weitere Möglichkeit zur mechanischen Verwirklichung des erfindungsgemäßen Prinzips bei Zeichenrädern, wobei jedoch das Prüfzeichenrad nicht am Ende der Zeichenradreihe,

4

sondern innerhalb dieser Reihe angeordnet sein kann. Es sind Zeichenräder 30, 31, 32, 33 und 34 dargestellt, die durch Drehung einer Hohlwelle 35 verstellt werden können. Die Hohlwelle 35 ist starr mit einem Einstellrad 36 verbunden und formschlüssig mit einer Welle 37 gekoppelt, so daß das Einstellrad 36 seitlich auf der Welle 37 mit der Hohlwelle 35 verschoben werden kann. Das Einstellrad 36 dient zum Verstellen der Zeichenräder 30, 32, 33 und 34 und kann mit einem dieser Räder individuell in Eingriff gebracht werden. Die Welle 37 ist mit einer weiteren Welle 38 starr verbunden, die mit einem Antriebsrad 39 formschlüssig, jedoch in ihrer Längsrichtung verschiebbar gekoppelt ist.

Wird das Einstellrad 36 mit einem der Zeichenräder 32, 33 und 34 in Eingriff gebracht, so dreht sich das jeweilige Zeichenrad gemeinsam mit dem Einstellrad 36, jedoch dreht sich gleichzeitig über die Welle 37 auch das Antriebsrad 39 und das Prüfzeichenrad 31. Auf diese Weise folgt das Prüfzeichenrad 31 jeder Drehbewegung eines der Zeichenräder 32, 33 und 34.

Soll auch das Zeichenrad 30 verstellt werden, so wird das Einstellrad 36 mit dem Prüfzeichenrad 31 in Eingriff gebracht, während das an sich hierfür vorgesehene Antriebsrad 39 gleichzeitig so verschoben wird, daß es mit dem Zeichenrad 30 in Eingriff kommt. Auf diese Weise werden das Zeichenrad 30 und das Prüfzeichenrad 31 gleichzeitig verdreht. Wird das Einstellrad 36 dann wieder nach rechts (Fig. 3) verschoben, so bringt eine Feder 40 das Antriebsrad 39 wieder in seine in Fig. 3 gezeigte Stellung, in der es in das Prüfzeichenrad 31 eingreift. Die Feder 40 ist also zwischen dem Antriebsrad 39 und einer seitlichen Halterung 41 angeordnet, die gleichzeitig als Lager für die Welle 38 dient.

Fig. 4 zeigt einen Querschnitt gemäß der in Fig. 3 gezeigten Blickrichtung 4-4. Die Welle 37 ist eine Vierkantwelle und trägt das Antriebsrad 39. Auf ihr kann die Hohlwelle 35 (Fig. 3) verschoben werden. Das Antriebsrad 39 ist an seinem Außenumfang mit einer Zahnung 42 versehen, die in eine Innenverzahnung 43 des Prüfzeichenrades 31 eingreift, so daß dieses bei Drehung des Antriebsrades 39 verdreht wird. Ferner ist ein Trägerkörper 44 zu erkennen, der als Träger für die Zeichenräder 30, 31, 32, 33 und 34 dient und mit einer seitlichen Aussparung versehen ist, in der der Verstellmechanismus für diese Zeichenräder angeordnet ist.

In Fig. 5 ist ein Ausführungsbeispiel der Erfindung für eine Anordnung von Schauzeichen oder Dekadenschaltern 50, 51, 52, 53, 54 dargestellt, die jeweils durch eine Drucktaste 55, 56, 57, 58, 59 individuell verstellt werden können, so daß sie jeweils eine von mehreren Ziffern anzeigen.

Unterhalb dieser Schauzeichen- oder Dekadenschalteranordnung ist schematisch eine drehbar gelagerte Welle 60 gezeigt, die mit Betätigungshebeln 62, 63, 64 und 65 versehen ist. Diese sind auf der Welle 60 so angebracht, daß sie bei Schwenkbewegung eine Drehung der Welle 60 bewirken, jedoch eine Drehbewegung der Welle 60 keine Schwenkbewegung der Hebel 62, 63, 64 und 65 zur Folge hat. Ein weiterer Betätigungshebel 61 ist mit der Welle 60 fest verbunden, so daß ihre Drehbewegung in jedem Falle eine Schwenkbewegung dieses Betätigungshebels 61 bewirkt.

Wird nun mit einem der Betätigungshebel 62, 63, 64 oder 65 der jeweils zugehörige Dekadenschalter 51, 52, 53 oder 54 betätigt, so wird die Welle 60 gedreht und damit der Betätigungshebel 61 geschwenkt, so daß gleichzeitig der Dekadenschalter 50 betätigt wird. Somit wird also bei jeder Betätigung einer Drucktaste 56, 57, 58 oder 59 auch die Drucktaste 55 betätigt, so daß der Dekadenschalter 50 als Prüfziffernschalter benutzt werden kann. Dieser zeigt bei entsprechender Zuordnung der Anfangsstellungen aller Dekadenschalter dann stets die modulo-10-Quersumme der angezeigten Ziffernfolge an.

Auch bei dem in Fig. 5 gezeigten Ausführungsbeispiel der Erfindung läßt sich eine Gewichtung beispielsweise mit der Wertfolge 1, 0, 1, 0 ... sehr einfach dadurch verwirklichen, daß bei den mit 0 gewichteten Ziffernstellen die Betätigungshebel 62 bis 65 nicht mit der Welle 60 gekoppelt sind, so daß deren Betätigung nicht in eine entsprechende Drehbewegung der Welle 60 umgesetzt wird.

## Patentansprüche

1. Vorrichtung zur Darstellung und/oder Erzeugung eines Prüfzeichens neben einer mehrstelligen Folge von Zeichen, von denen jeweils eines einem n mögliche Zeichen darstellenden und/oder erzeugenden, in n mögliche Positionen einstellbaren Zeichenträger zugeordnet ist, mittels eines Prüfzeichenträgers (16, 24, 31, 50), der mit einer Einstellvorrichtung (17, 27, 37, 60) über ein Einstellelement (18, 25, 39, 61) koppelbar und bei Betätigung der Einstellvorrichtung um einen vorbestimmten Betrag verstellbar ist, dadurch gekennzeichnet, daß zur Darstellung und/oder Erzeugung eines modulo-n-Prüfzeichens mindestens ein weiteres Einstellelement (17a, 28, 36, 62 bis 65) vorgesehen ist, daß die Einstellelemente (17a, 28, 36, 62 bis 65; 18, 25, 39, 61) über die Einstellvorrichtung (17, 27, 37, 60) miteinander gekoppelt sind, und daß während der Kopplung eines Einstellelements (18, 25, 39, 61) mit dem Prüfzeichenträger (16, 24, 31, 50) die Zeichenträger (10 bis 15, 20 bis 23, 32 bis 34, 51 bis 54) mit einem weiteren Einstellelement (17a, 28, 36, 62 bis 65) individuell koppelbar sind.

2. Vorrichtung nach Anspruch 1, dadurch gekennzeichnet, daß für die Verstellung verschiedener Zeichenträger unterschiedliche vorgegebene Beträge der Verstellung des Prüfzeichenträgers vorgesehen sind.

3. Vorrichtung nach Anspruch 1 oder 2, dadurch gekennzeichnet, daß ein einziges weiteres Einstellelement (17a, 28, 36) für alle Zeichenträger (10 bis 15, 20 bis 23, 32 bis 34) vorgesehen ist, mittels dem die Einstellvorrichtung (17, 27, 37) wahlweise mit jeweils einem Zeichenträger (10 bis 15, 20 bis 23, 32 bis 34) koppelbar ist.

4. Vorrichtung nach Anspruch 3 mit Zeichenrädern, die an ihrem Umfang jeweils mit n Zeichen versehen und über eine ihnen gemeinsame Welle (17) einstellbar sind, dadurch gekennzeichnet, daß die in ihrer Längsrichtung gemeinsam mit einem Einstellrad (17a) als weiteres Einstellelement innerhalb der Zeichenräder (10 bis 16) verschiebbare Welle (17) relativ zu einem stationär gelagerten Antriebsrad (18) als erstes Einstellelement verschiebbar ist, das mit dem Prüfzeichenrad (16) und mit der Welle (17) formschlüssig gekoppelt ist.

5. Vorrichtung nach Anspruch 3, mit Zeichenrädern, die an ihrem Außenumfang jeweils in eine von n möglichen Positionen einstellbar sind, dadurch gekennzeichnet, daß eine Welle (26) außerhalb der Zeichenräder (20 bis 24), an einer Schwenkvorrichtung (29, 30) axial unverschieblich gelagert ist und mit einem Antriebsrad (25) für das Prüfzeichenrad (24) fest verbunden ist, während ein Einstellrad (28) für die weiteren Zeichenräder (20 bis 23) auf ihr axial verschieblich und drehbar gelagert ist, und daß die Welle (26) relativ zu den Zeichenrädern (20 bis 24) derart verschwenkbar ist, daß das Antriebsrad (25) und das Einstellrad (28) wahlweise mit den Zeichenrädern (20 bis 24) an deren Außenumfang in Eingriff bewegbar sind.

6. Vorrichtung nach Anspruch 4, dadurch gekennzeichnet, daß die Welle (35) als Hohlwelle auf einer weiteren Welle (37) in ihrer Längsrichtung verschiebbar angeordnet ist, die das Antriebsrad (39) trägt und mit der Welle (35) formschlüssig gekoppelt ist, und daß die weitere Welle (37) in ihrer Längsrichtung auf einer Achse (38) verschiebbar, jedoch durch eine Federanordnung (40) in eine Ruhestellung bewegbar ist.

7. Vorrichtung nach Anspruch 1 oder 2 für eine aus individuell betätigbaren Schauzeichen oder Dekadenschaltern aufgebaute Zeichenanzeige, dadurch gekennzeichnet, daß zwischen jedem Schauzeichen oder Dekadenschalter (51 bis 54) und einer diesen gemeinsam zugeordneten Betätigungsvorrichtung (60) für ein weiteres Schauzeichen bzw. einen weiteren Dekadenschalter (50) jeweils ein nur in einer Richtung wirkendes Betätigungselement (62, 63, 64, 65) vorgesehen ist, das bei Einstellung eines Schauzeichens bzw. Dekadenschalters (51 bis 54) die Betätigungsvorrichtung (60) im Sinne einer Verstellung um jeweils einen vorgegebenen Betrag beaufschlagt.

8. Vorrichtung nach Anspruch 7, dadurch gekennzeichnet, daß die Betätigungsvorrichtung (60) eine Drehwelle ist, die über die Betätigungselemente (62, 63, 64, 65) drehbar und mit dem weiteren Schauzeichen bzw. dem weiteren Dekadenschalter (50) direkt gekoppelt ist.

## Claims

1. Apparatus for displaying and/or producing a check character, in addition to a multi-position sequence of characters each one of which is associated with a character carrier displaying and/or producing n possible characters and adjustable in n possible positions, by means of a check-character carrier (16, 24, 31, 50) which can be coupled with an adjusting device (17, 27, 37, 60) via an adjusting element (18, 25, 39, 61) and upon actuation of the adjusting device can be shifted by a predetermined amount, characterised in that for displaying and/or producing a modulo-n-check character at least one further adjusting element (17a, 28, 36, 62 to 65) is provided, in that the adjusting elements (17a, 28, 36, 62 to 65; 18, 25, 39, 61) can be coupled together via the adjusting device (17, 27, 37, 60), and in that during the coupling of the first adjusting element (18, 25, 39, 61) with the check-character carrier (16, 24, 31, 50) the character carriers (10 to 15, 20 to 23, 32 to 34, 51 to 54) can be individually coupled with one further adjusting element (17a, 28, 36, 62 to 65).

2. Apparatus according to Claim 1, characterised in that for the shifting of different character carriers there are provided different given amounts of the shifting of the check-character carrier.

3. Apparatus according to Claim 1 or 2, characterised in that only one further adjusting element (17a, 28, 36) is provided for all of the character carriers (10 to 15, 20 to 23, 32 to 34), by means of which the adjusting device (17, 27, 37) can be coupled selectively with a respective character carrier (10 to 15, 20 to 23, 32 to 34).

4. Apparatus according to Claim 3 with character wheels which are each provided on their circumference with n characters and are adjustable via a shaft (17) common thereto, characterised in that the shaft (17), which is displaceable in its longitudinal direction inside the character wheels (10 to 16) jointly with an adjusting wheel (17a) as further adjusting element, is displaceable relative to a stationarily mounted drive wheel (18) as first adjusting element which is coupled in form-locked manner with the check-character wheel (16) and with the shaft (17).

5. Apparatus according to Claim 3 with character wheels which are adjustable at their outer circumference respectively into one of n possible positions, characterised in that a shaft (26) is mounted axially non-displaceably outside the character wheels (20 to 24) on a swing device (29, 30) and is securely connected with a drive wheel (25) for the check-character wheel (24), while an adjusting wheel (28) for the further character wheels (20 to 23) is mounted axially displaceably and rotatably thereon, and in that the shaft (26) can be so swung relative to the character wheels (20 to 24) that the drive wheel (25) and the adjusting wheel (28) can be movec selectively into engagement with the character wheels (20 to 24) at their outer circumference.

6. Apparatus according to Claim 4, characterised in that the shaft (35) is disposed so as to be displaceable in its longitudinal direction as a hollow shaft on a further shaft (37) which carries the drive wheel (39) and is coupled in form-locked manner with the shaft (35), and in that the further shaft (37) is displaceable in its longitudinal direction on an axis (38) but is movable into a rest position by a spring arrangement (40).

7. Apparatus according to Claim 1 or 2 for a character indication composed of individually actuatable indicators or decade switches, characterised in that a respective unidirectionally acting actuator element (62, 63, 64, 65) is provided between each indicator or decade switch (51 to 54) and an associated common actuating device (60) for a further indicator or a further decade switch (50), as the case may be, which element (62, 63, 64, 65), upon adjustment of an indicator or decade switch (51 to 54), as the case may be, acts upon the actuating device (60) in the sense of a shifting by a respective given amount.

8. Apparatus according to Claim 7, characterised in that the actuating device (60) is a rotating shaft which is rotatable via the actuating elements (62, 63, 64, 65) and is coupled directly with the further indicator character or the further decade switch (50).

## Revendications

1. Dispositif pour représenter et/ou produire un caractère de contrôle à côté d'une suite de caractères occupant plusieurs places, lesquels sont chacun associés à un porte-caractères susceptible d'être amené dans n positions possibles et représentant et/ou produisant n caractères possibles, au moyen d'un support de caractères de contrôle (16, 24, 31, 50) qui peut être couplé avec un dispositif de réglage (17, 27, 37, 60) par l'intermédiaire d'un organe de réglage (18, 25, 39, 61) et est déplaçable d'une quantité préétablie en cas d'actionnement du dispositif de réglage, caractérisé en ce que pour la représentation et/ou la production d'un caractère de contrôle modulo-n il est prévu au moins un organe de réglage additionnel (17a, 28, 36, 62 à 65), en ce que les organes de réglage (17a, 28, 36, 62 à 65; 18, 25, 39, 61) sont couplés entre eux par l'intermédiaire du dispositif de réglage (17, 27, 37, 60) et en ce que durant le couplage du premier organe de réglage (18, 25, 39, 61) avec le support de caractères de contrôle (16, 24, 31, 50) les porte-caractères (10 à 15, 20 à 23, 32 à 34, 51 à 54) peuvent être couplés individuellement avec un organe de réglage additionnel (17a, 28, 36, 62 à 65).

2. Dispositif selon la revendication 1, caractérisé en ce que pour le déplacement de différents porte-caractères sont prévues des quantités préétablies variées de déplacement du support de caractères de contrôle.

3. Dispositif selon la revendication 1 ou 2, caractérisé en ce qu'il est prévu pour tous les porte-caractères (10 à 15, 20 à 23, 32 à 34) un seul organe de réglage additionnel (17a, 28, 36) au moyen duquel le dispositif de réglage (17, 27, 37) peut chaque fois être couplé sélectivement avec un porte-caractères (10 à 15, 20 à 23, 32 à 34).

4. Dispositif selon la revendication 3 equipé de roues porte-caractères qui sont munies à leur périphérie chacune de n caractères et sont réglables par l'intermédiaire d'un arbre (17) qui leur est commun, caractérisé en ce que l'arbre (17) susceptible de coulisser dans sa direction longitudinale, conjointement avec une roue de réglage (17a) servant d'organe de réglage additionnel, à l'intérieur des roues porte-caractères (10 à 16) peut coulisser par rapport à une roue d'entraînement (18) montée fixe et qui en tant que premier organe de réglage est couplée en liaison de forme avec la roue à caractères de contrôle (16) et avec l'arbre (17).

5. Dispositif selon la revendication 3, équipé de roues porte-caractères qui au niveau de leur périphérie extérieure peuvent chacune être amenées dans l'une quelconque de n positions possibles, caractérisé en ce qu'un arbre (26) est monté à l'extérieur des roues porte-caractères (20 à 24), sur un mécanisme de basculement (29, 30), de façon à ne pas pouvoir coulisser axialement et est relié de manière fixe à une roue d'entraînement (25) pour la roue à caractères de contrôle (24), alors qu'une roue de réglage (28) pour les autres roues porte-caractères (20 à 23) est montée sur cet arbre de manière à pouvoir coulisser axialement et tourner, et en ce que l'arbre (26) peut être amené à basculer par rapport aux roues porte-caractères (20 à 24) de telle manière que la roue d'entraînement (25) et la roue de réglage (28) puissent être mises en prise sélectivement avec les roues porte-caractères (20 à 24) au niveau de leur périphérie extérieure.

6. Dispositif selon la revendication 4, caractérisé en ce que l'arbre (35) est monté en tant qu'arbre creux, de façon à pouvoir coulisser dans sa direction longitudinale, sur un autre arbre (37) qui porte la roue d'entraînement (39) et est couplé en liaison de forme avec l'arbre (35), et en ce que l'autre arbre (37) peut coulisser dans sa direction longitudinale sur un axe (38) mais peut être amené dans une position de repos par un mécanisme à ressort (40).

7. Dispositif selon la revendication 1 ou 2 pour un système d'affichage de caractères composé d'indicateurs visuels ou commutateurs à décade susceptibles d'être actionnés individuellement, caractérisé en ce qu'entre chaque indicateur visuel ou commutateur à décade (51 à 54) et un dispositif d'actionnement (60), associé en commun à ceux-ci, pour un indicateur visuel ou commutateur à décade additionnel (50) est prévu respectivement un organe d'actionnement (62, 63, 64, 65) n'agissant que dans un seul sens et qui en cas de réglage d'un indicateur visuel ou commutateur à décade (51 à 54) agit sur le dispositif d'actionnement (60) de façon à le déplacer chaque fois d'une quantité préétablie.

8. Dispositif selon la revendication 7, caractérisé en ce que le dispositif d'actionnement (60) est un arbre rotatif qui peut être amené à tourner par l'intermédiaire des organes d'actionnement (62, 63, 64, 65) et est couplé directement avec l'indicateur visuel ou commutateur à décade additionnel (50).

FIG. 1

FIG. 2

FIG. 4

FIG. 3

FIG. 5